# EUROPEAN PATENT SPECIFICATION

(11) **EP 2 820 652 B1**
(45) Date of publication and mention of the grant of the patent: **23.01.2019**
(21) Application number: 13784539.2
(22) Date of filing: 12.02.2013
(51) Int. Cl.: G21C 7/14

(54) **CONTROL ROD DRIVE MECHANISM ("CRDM") ASSEMBLY FOR A NUCLEAR REACTOR**
REGELSTABANTRIEBSMECHANISMUS FÜR KERNREAKTOR
ENSEMBLE DE MÉCANISME D'ENTRAÎNEMENT DE BARRES DE COMMANDE (« CRDM ») POUR UN RÉACTEUR NUCLÉAIRE

(30) Priority: 28.02.2012 US 201213406876
(43) Date of publication of application: 07.01.2015
(73) Proprietor: Westinghouse Electric Company LLC, Cranberry Township, PA 16066 (US)
(72) Inventor: ALLEN, Bruce F., Granby, CT 06035 (US); FALVO, Gregory E., Suffield, CT 06078 (US)
(74) Representative: Gallo, Wolfgang
(86) International application number: PCT/US2013/025659
(87) International publication number: WO 2013/165501

(56) References cited:
- CN-B- 101 178 946
- US-A- 4 044 622
- US-A- 4 082 610
- US-A- 4 314 882
- US-A- 4 666 657
- US-A- 4 681 731
- US-A1- 2005 084 056
- US-A1- 2007 140 406
- US-A1- 2010 316 177
- Kiyoshi Takanabe ET AL: "Development of advanced CRDM without canopy seal welds", Nuclear Engineering and Design, 1 January 2002 (2002-01-01), pages 25-34, XP055340792, DOI: 10.1016/S0029-5493(02)00011-0 Retrieved from the Internet: URL:http://www.sciencedirect.com/science/a rticle/pii/S0029549302000110/pdfft?md5=2dc 28e382043eac6bddb2f4a5f531fb8&pid=1-s2.0-S 0029549302000110-main.pdf [retrieved on 2017-02-01]

## Description

### Field of the Invention

The present invention relates to a nuclear reactor having a control rod drive mechanism ("CRDM") assembly, such as, but not limited to, a pressurized water reactor.

### Background of the Invention

In a nuclear reactor for power generation, such as a pressurized water reactor ("PWR"), heat is generated by fission of a nuclear fuel such as enriched uranium. The heat is transferred into a coolant flowing through a reactor core. The reactor core contains elongated nuclear fuel rods mounted in proximity with one another on a fuel assembly structure through and over which the coolant flows. The nuclear fuel rods are spaced from one another in coextensive parallel arrays. Some of the neutrons and other atomic particles released during nuclear decay of fuel atoms in a given nuclear fuel rod pass through the spaces between fuel rods and impinge on the fissile material in an adjacent fuel rod. This contributes to the nuclear reaction and to the heat generated by the reactor core. Movable control rods are dispersed throughout the reactor core to enable control of the overall rate of fission. The control rods absorb a portion of the neutrons passing between the fuel rods, which otherwise would contribute to the fission reaction. The control rods generally include elongated rods of neutron absorbing material and fit into longitudinal openings or guide thimbles in the fuel assemblies parallel to and between the fuel rods. Inserting a control rod into the core causes neutrons to be absorbed without contributing to fission in an adjacent fuel rod. The greater the distance the control rod is inserted, the more neutrons are absorbed. Retracting the control rod reduces the extent of neutron absorption and increases the rate of the nuclear reaction and the power output of the core. The number of control rods inserted and the distance by which they are inserted into the reactor core can be varied to control the reactivity of the reactor.

The control rods are supported in cluster assemblies, e.g., rod control cluster assemblies ("RCCAs"), which are movable to advance or retract a group of control rods relative to the core. For this purpose, control rod drive mechanism ("CRDM") assemblies are provided. The RCCAs are typically part of an upper internals arrangement located within the nuclear reactor vessel above the reactor core. The reactor vessel is typically pressurized to a high internal pressure, and the CRDM assemblies are housed in pressure housings that are tubular extensions of the reactor pressure vessel. In a PWR, for example, CRDM assemblies are mounted on the reactor pressure vessel head.

In general, CRDM assemblies are hermetically sealed linear actuators that position control rods within the reactor core of a reactor vessel in a nuclear reactor. The CRDM assemblies are mounted to the head of the reactor vessel in a matrix pattern that is consistent with the layout of the reactor core. The CRDM assemblies are laterally supported at the top by a seismic support structure. Rod position is measured directly by rod position indicators ("RPIs") and rod position is monitored indirectly by a step counter in the control room of the nuclear reactor.

The CRDM accomplishes its functions without mechanical or electrical penetrations through the reactor coolant pressure boundary. All moving parts are housed within a pressure vessel through which magnetic energy passes to control the rod motion. The reactor pressure vessel retains reactor coolant under all operating conditions.

Various CRDM assemblies are known in the art. Typically, the CRDM assembly includes a latch housing, a rod travel housing, a latch assembly, a coil stack assembly, and a drive rod assembly. The latch housing is threaded onto a latch housing nozzle and seal welded with a canopy seal weld. The rod travel housing is threaded into the latch housing and seal welded with another canopy seal weld. The latch housing and rod travel housing form the pressure boundary around the moving components of the CRDM assembly, and support the other components of the CRDM assembly. The latch assembly is contained within the latch housing. The coil stack assembly includes coils which receive electrical impulses from the CRDM assembly control system. Magnetic energy generated by the coils is converted into linear motion by the latch assembly to move the drive rod assembly, which is attached to an RCCA and therefore, controls the positioning of the RCCA within the reactor core.

The coil stack assembly includes a set of coils that generate magnetic flux. For example, the coil stack assembly can provide magnetic energy for a latch assembly. It surrounds the latch housing and includes three coils that operate corresponding magnets in the latch assembly. Nickel-plated cast iron components provide the support structure for the coils and conduct magnetic flux to the latch assembly. Electrical connectors are sealed against moisture and dust and are easily coupled and uncoupled. The coils receive electrical impulses from a CRDM control system and are cooled externally by forced air. The latch assembly converts the magnetic energy into linear motion. A drive rod assembly connects a CRDM motor to a control rod. A pressure housing retains the reactor coolant and supports other components of the CRDM.

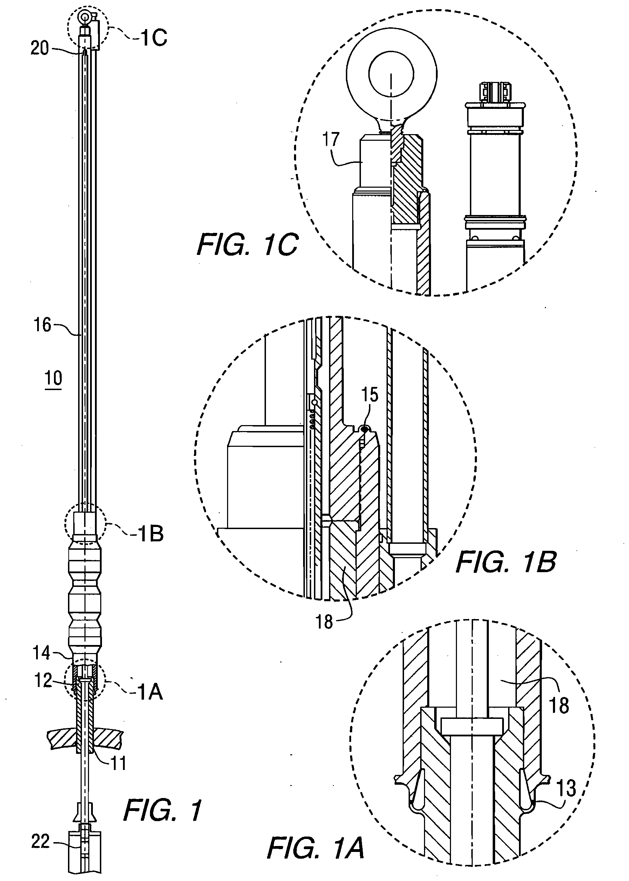

Figures 1, 1A, 1B and 1C show generally a CRDM assembly 10 which is known in the art. The CRDM assembly 10 includes a reactor vessel CRDM nozzle 12, a latch housing 14, a rod travel housing 16, a latch assembly 18, a drive rod assembly 20 and a RCCA 22. One end of the reactor vessel CRDM nozzle 12 is fixedly attached or connected to the reactor vessel head. In one embodiment, the reactor vessel CRDM nozzle 12 is mounted onto the reactor vessel head by using a partial penetration weld 11. The other end of the latch housing nozzle 12 is attached or connected to one end of the latch housing 14. The one end of the latch housing 14 is threaded onto the reactor vessel CRDM nozzle 12 and seal welded using a lower canopy seal weld 13 (see Figure 1A). The lower canopy weld seal 13 functions to seal the annular pressure boundary defined between the latch housing 14 and the rod travel housing 16. The other end of the latch housing 14 is attached or connected by seal welding with a mid-canopy seal weld 15 (see Figure 1B) to one end of the rod travel housing 16. The other end of the rod travel housing 16 is attached or connected to one end of a latch assembly 18. The latch assembly 18 includes the drive rod assembly 20. An end cap is threaded into an upper end of the rod travel housing 16 and seal welded using an upper canopy seal weld 17 (see Figure 1C).

The drive rod assembly 20 is attached to the RCCA 22. The drive rod assembly 20 controls the positioning of the RCCA 22 in the nuclear reactor core (not shown). Movement of the RCCA 22 can be provided in discrete steps by three electromagnets (not shown). When the RCCA 22 arrives at its designated position, the CRDM assembly 10 holds the RCCA 22 indefinitely in response to electrical signals from the CRDM control system (not shown). Upon interruption of power to the CRDM assembly 10, the drive rod assembly 20 is released, the RCCA 22 along with the attached drive rod assembly 20 fall by gravity into the nuclear reactor core to ensure safe shutdown of the reactor. This is referred to as a reactor trip. The power supply and logic cabinets (not shown) typically control any stepping or holding or tripping.

Thus, the CRDM assembly 10 can withdraw, hold, or insert the RCCA 22 in response to electrical signals from the CRDM control system (not shown). The latch assembly 18 of the CRDM assembly 10 can hold the RCCA 22 at any level indefinitely. When it is necessary to initiate shutdown, e.g., in response to an emergency event in the nuclear reactor (not shown), the latch assembly 18 releases the drive rod assembly 20, allowing the RCCA 22 to drop by gravity to the bottom of the reactor core, ensuring safe shutdown of the nuclear reactor.

The pressure housing assembly (not shown) is classified Safety Class 1 in accordance with ANS-51.1. The latch assembly 18 is classified ANS Safety Class 3 in accordance with ANS-51.1. Small parts of the latch assembly 18 which do not serve a safety-related function may be classified as Non-Nuclear Safety (NNS).

Further, the pressure housing (not shown) is classified Seismic Category 1 in accordance with Nuclear Regulatory Commission (NRC) Regulatory Guide 1.29. The latch assembly 18 may be upgraded to meet this same classification using the recommendations of NRC Regulatory Guide 1.100, Revision 2, and the recommended practices for Seismic Qualification of equipment contained in IEEE Std 344-1987. The latch assembly 18 is not an IEEE Class IE component. However, IEEE Standard 344 includes methodology that is applicable for qualification of mechanical components and is the methodology recommended by NRC Regulatory Guide 1.100, Revision 2.

In known CRDM assembly designs, a plurality of canopy seal welds is employed to attach or couple together various components of the CRDM assembly. It is known that canopy seal welds have problems associated therewith. For example, experience using canopy seal welds in commercial nuclear reactors has shown a tendency for these welds to leak and for corrosion to form therein. Thus, there is a need in the art to design and develop a CRDM assembly which can reduce or minimize the number of canopy seal welds used to attach or connect the various components of, and associated with, the CRDM assembly, including the latch assembly, rod travel housing, latch housing and latch housing nozzle.

### SUMMARY OF THE INVENTION

In one aspect, the present invention provides a control rod drive mechanism assembly within a nuclear reactor having a nuclear reactor vessel, a nuclear reactor core, a reactor vessel head, a latch housing nozzle, a latch housing, a rod travel housing, a latch assembly, a drive rod assembly and a rod control cluster assembly. The control rod drive mechanism assembly includes a rod travel housing having a first end and a second end, comprising a cylindrical tube to house said drive rod assembly; integrated component, absent of a threaded connection, absent of a canopy seal weld, attached to the reactor vessel head, comprising:a latch housing nozzle having a first end and a second end, the first end of the latch housing nozzle attached to the reactor vessel head; and a latch housing having a first end and a second end, the first end of the latch housing integrated with the second end of the latch housing nozzle by an integration mechanism selected from the group consisting of a bimetallic weld and pre-fabrication to form a single component;a latch assembly positioned within the latch housing and connected to the first end of the rod travel housing;a threaded connection, the first end of the rod travel housing being threaded into the second end of the latch housing;a canopy seal weld, the first end of the rod travel housing being welded to the second end of the latch housing; and an end cap connected to the second end of the rod travel housing absent a canopy seal weld.

In another aspect, the present invention provides a method for controlling the reactivity of a nuclear reactor. The method includes inserting a control rod drive mechanism into the reactor vessel to decrease the rate of power output from the nuclear reactor; retracting a control rod drive mechanism out of the reactor vessel to increase the rate of power output from the nuclear reactor,wherein the control rod drive mechanism, comprises:a rod control cluster assembly; a drive rod assembly connected to the rod control cluster assembly and structured to vertically move said rod control cluster assembly; a rod travel housing having a first end and a second end, and comprising a cylindrical tube to house said drive rod assembly; an integrated component absent of a threaded connection and absent of a canopy seal weld, attached to the reactor vessel head, comprising: a latch housing nozzle having a first end and a second end, a the first end of the latch housing nozzle attached to the reactor vessel head; and a latch housing having a first end and a second end, the first end of the latch housing integrated with the second end of the latch housing nozzle by an integration mechanism selected from the group consisting of a bimetallic weld and pre-fabrication to form a single component; a latch assembly positioned within the latch housing and connected to the first end of the rod travel housing; a threaded connection, the first end of the rod travel housing being threaded into the second end of the latch housing; a canopy seal weld, the first end of the rod travel housing being welded to the second end of the latch housing; and an end cap connected to the second end of the rod travel housing absent a canopy seal weld.

### BRIEF DESCRIPTION OF THE DRAWINGS

A further understanding of the invention can be gained from the following description of the preferred embodiments when read in conjunction with accompanying drawings in which:
Figure 1 is an elevational view of a CRDM assembly in accordance with the prior art. Figures 1A, 1B and 1C are detailed elevational views of the CRDM assembly in Figure 1.
Figure 2 is an elevational view of a CRDM assembly in accordance with an embodiment of the present invention. Figures 2A, 2B and 2C are detailed elevational views of the CRDM assembly in Figure 2.

### DETAILED DESCRIPTION OF THE INVENTION

The present invention relates to a control rod drive mechanism ("CRDM") assembly for a nuclear reactor. The CRDM assembly can be used in various nuclear reactor designs, such as, but not limited to, pressurized water reactors ("PWRs") and boiling water reactors ("BWRs"). For ease of description, the CRDM assembly of the present invention will be described in accordance with an embodiment wherein the nuclear reactor is a PWR and, in particular, an AP1000 PWR which is designed and manufactured by Westinghouse Electric Company. The PWR includes a reactor pressure vessel which contains a nuclear reactor core, fuel rods, control rods, RCCAs, CRDM assemblies and related components. The CRDM assemblies are mounted onto the head of the reactor pressure vessel.

In the present invention, each of the CRDM assemblies include a latch housing nozzle, a latch housing, a rod travel housing, a latch assembly, a drive rod assembly, and a RCCA. One end of the latch housing nozzle is attached or connected to the reactor vessel head. The other end of the latch housing nozzle is attached or connected to one end of the latch housing. The latch housing nozzle and the latch housing are attached or connected in the absence of a threaded connection and in the absence of being seal welded with a canopy seal weld. In one embodiment, the latch housing nozzle and the latch housing are fabricated and/or manufactured to form a single integrated component. This nozzle/latch housing assembly can be installed into the reactor vessel head as an integrated unit. In this embodiment, the latch housing nozzle and the latch housing can be welded together by, for example, a full penetration bimetallic weld. This eliminates the need for a canopy seal weld which has shown a tendency to leak and/or corrode. The other end of the latch housing is attached or connected to one end of the rod travel housing. These two components are typically attached or connected by a threaded connection and/or a seal weld, such as but not limited to, a canopy seal weld. The other end of the rod travel housing is attached or connected to one end of the latch assembly. These two components are typically attached or connected by a threaded connection and/or a seal weld. The latch assembly includes a drive rod assembly and a RCCA. One end of the drive rod assembly is attached or connected to the other end of the latch assembly and the other end of the drive rod assembly is attached or connected to one end of the RCCA.

The latch housing compresses a cylindrical tube serving to house various gripping or latching mechanisms which are operatively associated with the drive rod assembly. The rod travel housing includes a cylindrical tube which houses and guides the vertically movable drive rod assembly. The drive rod assembly is connected to the RCCA such that the RCCA is moved either upwardly or downwardly to control reactor operations.

To actuate or control the gripping or latching mechanisms associated with the drive rod assembly, each CRDM assembly can be provided with a coil stack assembly which can include a one-piece integrated package of three, vertically spaced, but connected, electromagnetic assemblies. The various electromagnetic assemblies can be sequentially energized and deenergized so as to elevate or lower the drive rod assembly and therefore, the RCCA controlled thereby. In one embodiment, the latch assembly can include a coil stack having coils of copper wire (e.g., thousands of feet each), wrapped in fiberglass insulation, wound on an epoxy/fiberglass bobbin, and potted using a high temperature silicone and sand mixture. The RCCA is attached or connected to the drive rod assembly such that when the drive rod assembly is moved upwardly, the RCCA is correspondingly retracted from the nuclear reactor core. When the drive rod assembly is moved downwardly, the RCCA is correspondingly inserted into the nuclear reactor core. When the RCCA is retracted, the rate of nuclear reaction and power output of the core is increased. When the RCCS is inserted, the rate of nuclear reaction and power output of the core is decreased. In one embodiment, wherein it is necessary to shutdown the nuclear reactor in response to an emergency event, the latch assembly releases the drive rod assembly and the RCCA is allowed to drop by gravity to the bottom of the reactor core.

In accordance with the present invention, the latch assembly can be removed or installed with the rod travel housing which can significantly simplify latch assembly repair at the nuclear power plant.

The latch assembly can be upgraded to Seismic Category 1 in accordance with Nuclear Regulatory Commission (NRC) Regulatory Guide 1.29 using the recommendations of NRC Regulatory Guide 1.100, Revision 2, and the recommended practices for Seismic Qualification of equipment contained in IEEE Standard 344-1987. The latch assembly is not an IEEE Class IE component. However, IEEE Standard 344 includes methodology that is applicable for qualification of mechanical components, and is the methodology recommended by NRC Regulatory Guide 1.100, Revision 2.

The CRDM assembly of the present invention can optionally include a hex shape machined onto the end of the rod travel housing that attaches to the latch housing to assist in the torquing or untorquing of the rod travel housing into the latch housing. Further, the CRDM assembly of the present invention can eliminate the conventional top vent screw in the rod travel housing.

In the art, it is typical to fabricate the CRDM assembly, for example, in one facility, and then install the CRDM assembly onto the reactor head to produce a finished component. In accordance with the present invention, the CRDM latch assembly can be fabricated, for example, in one facility, and the ASME Code pressure boundary housing can be fabricated in another different facility where the reactor head is fabricated. The CRDM assembly of the present invention allows the manufacturer of the reactor pressure vessel head to make the complete ASME Code Pressure Boundary under its N-Stamp Program and the CRDM manufacturer to make solely the non-ASME Code latch assembly. It is believed that the fabrication and manufacture steps employed in the present invention, as compared to the prior art, can result in significant cost savings.

Further advantages associated with the CRDM assembly of the present invention can include one or more of the following:
- a reduced number of canopy seals which can result in reduced maintenance and leakage concerns;
- integral venting and draining features incorporated into existing canopy seals that can significantly prolong service life; and
- ease of latch assembly replacement in remote field service operations.

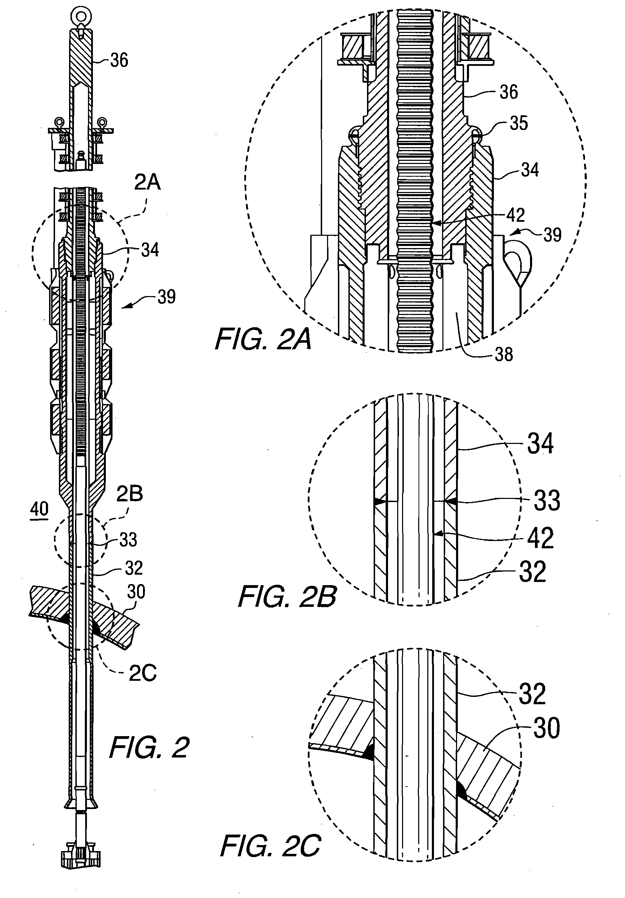

Figure 2 shows generally a CRDM assembly 40 in accordance with an embodiment of the present invention. The CRDM assembly 40 includes a reactor vessel head 30, a latch housing nozzle 32, a latch housing 34, a rod travel housing 36 and a coil stack assembly 39. Figures 2A, 2B and 2C show details of the CRDM assembly 40 as shown in Figure 2, including a canopy seal interface, a bi-metallic interface and a latch housing nozzle interface, respectively. As shown in Figure 2C, the latch housing nozzle 32 interfaces with and is connected to the reactor vessel head 30. As shown in Figures 2 and 2B, one end of the latch housing 34 and the latch housing nozzle 32 are connected by a full penetration bimetallic weld 33. As shown in Figures 2 and 2A, the other end of the latch housing 34, is attached or connected to an end of the rod travel housing 36. As shown in Figure 2A, the rod travel housing 36 is threaded into the latch housing 34 end and is seal welded with a canopy seal weld 35. This canopy seal weld 35 serves as a maintenance joint for factory or field installation welding services. Further, as shown in Figure 2A, one end of a latch assembly 38 is attached to another end of the rod travel housing 36. This configuration allows the latch assembly 38 to be removed or installed with the rod travel housing 36 and therefore, simplifies repair or replacement of the latch assembly 38. In one embodiment, these two components can be attached in a field service operation. Further, Figures 2A and 2B show a drive rod assembly 42. As shown in Figure 2A, one end of the drive rod assembly 42 is connected to the latch assembly 38 and the other end is connected to a RCCA (not shown).

In one embodiment, the latch housing 34 and the latch housing nozzle 32 (as shown in Figure 2B) can be integrated such that these two components are fabricated and/or manufactured to form a single integrated component. In this embodiment, one end of the integrated component (the end or portion which contains the latch housing nozzle 32) is attached or connected to the reactor vessel head 30 (as shown in Figure 2C). The other end of the integrated component (the end or portion which contains the latch housing 34) is attached or connected to an end of the rod travel housing 36 as shown in Figure 2A.

As shown in Figure 2, the CRDM assembly 40 in accordance with an embodiment of the present invention eliminates the need for an upper canopy seal weld (17, as shown in Figure 1C) and a lower canopy seal weld (13, as shown in Figure 1A).

In one embodiment, the latch housing nozzle 32 is a thermally treated nickel alloy. The latch assembly can be fabricated of Type 304 and 410 stainless steels, stellite hard facing materials, and hard chromium plating. Typically, the hard chromium plating is applied to or deposited on wear surfaces.

Whereas particular embodiments of the invention have been described herein for purposes of illustration, it will be evident to those skilled in the art that numerous variations of the details may be made without departing from the invention as set forth in the appended claims.

## Claims

1. A nuclear reactor having a control rod drive mechanism assembly (40) positioned therein, the nuclear reactor having a reactor vessel, a reactor core, and a reactor vessel head (30), the nuclear reactor control rod drive mechanism, comprising:
a rod control cluster assembly;
a drive rod assembly connected to the rod control cluster assembly and structured to vertically move said rod control cluster assembly;
a rod travel housing (36) having a first end and a second end, and comprising a cylindrical tube to house said drive rod assembly;
**characterized by** an integrated component absent of a threaded connection and absent of a canopy seal weld, attached to the reactor vessel head (30), comprising:
a latch housing nozzle (32) having a first end and a second end, the first end of the latch housing nozzle (32) attached to the reactor vessel head (30); and
a latch housing (34) having a first end and a second end, the first end of the latch housing (34) integrated with the second end of the latch housing nozzle (32) by an integration mechanism selected from the group consisting of a bimetallic weld and pre-fabrication to form a single component;
a latch assembly (38) positioned within the latch housing (34) and connected to the first end of the rod travel housing (36);
a threaded connection, the first end of the rod travel housing (36) being threaded into the second end of the latch housing (34);
a canopy seal weld, the first end of the rod travel housing (36) being welded to the second end of the latch housing (34); and
an end cap connected to the second end of the rod travel housing (36) absent a canopy seal weld.

2. The nuclear reactor and control rod drive mechanism assembly (40) of claim 1, wherein the reactor vessel is a pressurized reactor vessel.

3. The nuclear reactor and control rod drive mechanism assembly (40) of claim 1, wherein the rod control cluster assembly is attached to the drive rod assembly (42) such that as the drive rod assembly (42) is moved upwardly and downwardly, the rod control cluster assembly is correspondingly retracted and inserted into the nuclear reactor core to control a rate of nuclear reaction in the reactor core.

4. A method to control the reactivity of a nuclear reactor having a reactor vessel, a reactor core and a reactor vessel head (30), comprising:
inserting a control rod drive mechanism (40) into the reactor vessel to decrease the rate of power output from the nuclear reactor;
retracting a control rod drive mechanism (40) out of the reactor vessel to increase the rate of power output from the nuclear reactor,
wherein the control rod drive mechanism (40), comprises:
a rod control cluster assembly;
a drive rod assembly connected to the rod control cluster assembly and structured to vertically move said rod control cluster assembly;
a rod travel housing (36) having a first end and a second end, and comprising a cylindrical tube to house said drive rod assembly;
an integrated component absent of a threaded connection and absent of a canopy seal weld, attached to the reactor vessel head (30), comprising:
a latch housing nozzle (32) having a first end and a second end, a the first end of the latch housing nozzle (32) attached to the reactor vessel head (30); and
a latch housing (34) having a first end and a second end, the first end of the latch housing (34) integrated with the second end of the latch housing nozzle (32) by an integration mechanism selected from the group consisting of a bimetallic weld and pre-fabrication to form a single component;
a latch assembly (38) positioned within the latch housing (34) and connected to the first end of the rod travel housing (36);
a threaded connection, the first end of the rod travel housing (36) being threaded into the second end of the latch housing (34);
a canopy seal weld, the first end of the rod travel housing (36) being welded to the second end of the latch housing (34); and
an end cap connected to the second end of the rod travel housing (36) absent a canopy seal weld.

## Patentansprüche

1. Kernreaktor mit einer darin positionierten Steuerstab-Antriebsmechanismus-Anordnung (40),
wobei der Kernreaktor einen Reaktorbehälter, einen Reaktorkern und einen Reaktorbehälterkopf (30) aufweist, wobei der Kernreaktor-Steuerstab-Antriebsmechanismus umfasst:
eine Stabsteuer-Clusteranordnung;
eine Antriebsstangenanordnung, die mit der Stabsteuer-Clusteranordnung verbunden und dazu ausgebildet ist, die Stabsteuer-Clusteranordnung vertikal zu bewegen;
ein Stabhubgehäuse (36) mit einem ersten Ende und einem zweiten Ende, und umfassend ein zylindrisches Rohr, um die Antriebsstangenanordnung aufzunehmen;
**gekennzeichnet durch** eine integrierte Komponente ohne Schraubverbindung und ohne Überwurfdichtungsschweißnaht, die an den Reaktorbehälterkopf (30) angebracht ist, umfassend:
einen Riegelgehäuseansatz (32) mit einem ersten Ende und einem zweiten Ende, wobei das erste Ende des Riegelgehäuseansatzes (32) an dem Reaktorbehälterkopf (30) angebracht ist; und
ein Riegelgehäuse (34) mit einem ersten Ende und einem zweiten Ende, wobei das erste Ende des Riegelgehäuses (34) mit dem zweiten Ende des Riegelgehäuseansatzes (32) integriert ist, durch einen Integrationsmechanismus ausgewählt aus der Gruppe bestehend aus einer Bimetallschweißung und Vorfertigung zur Bildung einer einzelnen Komponente;
eine Riegelanordnung (38), die innerhalb des Riegelgehäuses (34) positioniert und mit dem ersten Ende des Stabhubgehäuses (36) verbunden ist;
eine Schraubverbindung, wobei das erste Ende des Stabhubgehäuses (36) in das zweite Ende des Riegelgehäuses (34) eingeschraubt ist;
eine Überwurfdichtungsschweißnaht, wobei das erste Ende des Stabhubgehäuses (36) in das zweite Ende des Riegelgehäuses (34) eingeschweißt ist; und
eine Endkappe, die mit dem zweiten Ende des Stabhubgehäuses (36) ohne Überwurfdichtungsschweißnaht verbunden ist.

2. Kernreaktor und Steuerstab-Antriebsmechanismus-Anordnung (40) nach Anspruch 1, wobei der Reaktorbehälter ein Reaktordruckbehälter ist.

3. Kernreaktor und Steuerstab-Antriebsmechanismus-Anordnung (40) nach Anspruch 1, wobei die Stabsteuer-Clusteranordnung an der Antriebsstangenanordnung (42) angebracht ist, so dass, wenn die Antriebsstangenanordnung (42) aufwärts oder abwärts bewegt wird, die Stabsteuer-Clusteranordnung entsprechend zurückgezogen und in den Kernreaktorkern eingeführt wird, um eine Rate der Kernreaktion in dem Reaktorkern zu steuern.

4. Verfahren zur Steuerung der Reaktivität eines Kernreaktors mit einem Reaktorbehälter, einem Reaktorkern und einem Reaktorbehälterkopf (30), umfassend die folgenden Schritte:
Einführen eines Steuerstab-Antriebsmechanismus (40) in den Reaktorbehälter, um die Rate der Leistungsabgabe von dem Kernreaktor zu verringern;
Zurückziehen eines Steuerstab-Antriebsmechanismus (40) aus dem Reaktorbehälter, um die Rate der Leistungsabgabe von dem Kernreaktor zu erhöhen,
wobei der Steuerstab-Antriebsmechanismus (40) umfasst:
eine Stabsteuer-Clusteranordnung;
eine Antriebsstangenanordnung, die mit der Stabsteuer-Clusteranordnung verbunden und aufgebaut ist, um die Stabsteuer-Clusteranordnung vertikal zu bewegen;
ein Stabhubgehäuse (36) mit einem ersten Ende und einem zweiten Ende, und umfassend ein zylindrisches Rohr, um die Antriebsstangenanordnung aufzunehmen;
eine integrierte Komponente ohne Schraubverbindung und ohne Überwurfdichtungsschweißnaht, die an den Reaktorbehälterkopf (30) angebracht ist, umfassend:
einen Riegelgehäuseansatz (32) mit einem ersten Ende und einem zweiten Ende, wobei das erste Ende des Riegelgehäuseansatzes (32) an dem Reaktorbehälterkopf (30) angebracht ist; und
ein Riegelgehäuse (34) mit einem ersten Ende und einem zweiten Ende, wobei das erste Ende des Riegelgehäuses (34) mit dem zweiten Ende der Riegelgehäusedüse (32) integriert ist, durch einen Integrationsmechanismus ausgewählt aus der Gruppe bestehend aus einer Bimetallschweißung und Vorfertigung zur Bildung einer einzelnen Komponente;
eine Riegelanordnung (38), die innerhalb des Riegelgehäuses (34) positioniert und mit dem ersten Ende des Stabhubgehäuses (36) verbunden ist;
eine Schraubverbindung, wobei das erste Ende des Stabhubgehäuses (36) in das zweite Ende des Riegelgehäuses (34) eingeschraubt ist;
eine Überwurfdichtungsschweißnaht, wobei das erste Ende des Stabhubgehäuses (36) in das zweite Ende des Riegelgehäuses (34) eingeschweißt ist; und
eine Endkappe, die mit dem zweiten Ende des Stabhubgehäuses (36) ohne Überwurfdichtungsschweißnaht verbunden ist.

## Revendications

1. Réacteur nucléaire ayant un assemblage de mécanisme d'entraînement (40) de barre de commande positionné dans celui,
le réacteur nucléaire ayant une cuve de réacteur, un coeur de réacteur et une tête (30) de cuve de réacteur, le mécanisme d'entraînement de barre de commande du réacteur nucléaire comprenant :
un assemblage grappe de commande des barres ;
un assemblage de tiges d'entraînement relié à l'assemblage grappe de commande des barres, et structuré pour déplacer verticalement l'assemblage grappe de commande des barres ;
un boîtier (36) de levée de barre, ayant une première extrémité et une seconde extrémité et comprenant un tube cylindrique pour loger l'assemblage de tiges d'entraînement ;
**caractérisé par** un composant intégré sans connexion à filetage et sans soudure de scellage de coupole, attaché à la tête (30) de cuve de réacteur, et comprenant :
un bout de boîtier de verrouillage (32) ayant une première extrémité et une seconde extrémité, la première extrémité du bout de boîtier de verrouillage (32) étant attachée à la tête (30) de cuve de réacteur ; et
un boîtier de verrouillage (34) ayant une première extrémité et une seconde extrémité, la première extrémité du boîtier de verrouillage (34) étant intégrée avec la seconde extrémité du bout de boîtier de verrouillage (32) au moyen d'un mécanisme d'intégration choisi dans le groupe constitué par une soudure bimétallique et la préfabrication pour former un seul composant ;
un assemblage de verrouillage (38) positionné à l'intérieur du boîtier de verrouillage (34) et relié à la première extrémité du boîtier (36) de levée de barre ;
une connexion à filetage, la première extrémité du boîtier (36) de levée de barre étant vissée dans la seconde extrémité du boîtier de verrouillage (34) ;
une soudure de scellage de coupole, la première extrémité du boîtier (36) de levée de barre étant soudée dans la seconde extrémité du boîtier de verrouillage (34) ; et
un capuchon d'extrémité relié à la seconde extrémité du boîtier (36) de levée de barre (36) sans soudure de scellage de coupole.

2. Réacteur nucléaire et assemblage de mécanisme d'entraînement (40) de barre de commande selon la revendication 1, la cuve de réacteur étant une cuve sous pression de réacteur.

3. Réacteur nucléaire et assemblage de mécanisme d'entraînement (40) de barre de commande selon la revendication 1, l'assemblage grappe de commande des barres étant attaché à l'assemblage de tiges d'entraînement (42), de telle manière que, lorsque l'assemblage de tiges d'entraînement (42) est déplacé vers le haut et vers le bas, l'assemblage grappe de commande des barres est en conséquence rétracté et inséré dans le coeur du réacteur nucléaire pour commander un taux de la réaction nucléaire dans le coeur de réacteur.

4. Procédé pour commander la réactivité d'un réacteur nucléaire ayant une cuve de réacteur, un coeur de réacteur et une tête (30) de cuve de réacteur, le procédé comprenant les étapes consistant à :
insérer un mécanisme d'entraînement (40) de barre de commande dans la cuve de réacteur pour diminuer le taux de production d'énergie du réacteur nucléaire ;
rétracter un mécanisme d'entraînement (40) de barre de commande de la cuve de réacteur pour augmenter le taux de production d'énergie du réacteur nucléaire ;
dans lequel le mécanisme d'entraînement (40) de barre de commande comprend :
un assemblage grappe de commande des barres ;
un assemblage de tiges d'entraînement relié à l'assemblage grappe de commande des barres, et structuré pour déplacer verticalement l'assemblage grappe de commande des barres ;
un boîtier (36) de levée de barre, ayant une première extrémité et une seconde extrémité et comprenant un tube cylindrique pour loger l'assemblage de tiges d'entraînement ;
un composant intégré sans connexion à filetage et sans soudure de scellage de coupole, attaché à la tête (30) de cuve de réacteur, et comprenant :
un bout de boîtier de verrouillage (32) ayant une première extrémité et une seconde extrémité, la première extrémité du bout de boîtier de verrouillage (32) étant attachée à la tête (30) de cuve de réacteur ; et
un boîtier de verrouillage (34) ayant une première extrémité et une seconde extrémité, la première extrémité du boîtier de verrouillage (34) étant intégrée avec la seconde extrémité du bout de boîtier de verrouillage (32) au moyen d'un mécanisme d'intégration choisi dans le groupe constitué par une soudure bimétallique et la préfabrication pour former un seul composant ;
un assemblage de verrouillage (38) positionné à l'intérieur du boîtier de verrouillage (34) et relié à la première extrémité du boîtier (36) de levée de barre ;
une connexion à filetage, la première extrémité du boîtier (36) de levée de barre étant vissée dans la seconde extrémité du boîtier de verrouillage (34) ;
une soudure de scellage de coupole, la première extrémité du boîtier (36) de levée de barre étant soudée dans la seconde extrémité du boîtier de verrouillage (34) ; et
un capuchon d'extrémité relié à la seconde extrémité du boîtier (36) de levée de barre sans soudure de scellage de coupole.
